# EUROPEAN PATENT APPLICATION

(11) **EP 4 079 384 A1**
(43) Date of publication of application: **26.10.2022**
(21) Application number: 22164858.7
(22) Date of filing: 28.03.2022
(51) Int. Cl.: A63F 13/798, G06N 3/02

(54) **A METHOD OF CREATING RANKING, A SYSTEM FOR CREATING RANKING AND A RANKING**

(30) Priority: 22.04.2021 PL 43766821
(71) Applicant: Morai Sp. z o.o., 87-100 Torun (PL)
(72) Inventor: Klimek, Jakub, 50-372 Wroclaw (PL); Klimek, Jacek, 87-100 Torun (PL)
(74) Representative: JD&P Patent Attorneys Joanna Dargiewicz & Partners

(57) **Abstract**

The subject of the invention is the method of creating ranking, especially a ranking of players or teams in esport gameplays, on the basis of historical data, with the use of neural networks, including the following steps:
a. Neural network learning on the basis of historical data, and particularly data on the parameters of esport gameplays and the results of these gameplays.
b. Creating ranking of players or teams through a neural network on the basis of current data, and particularly data on the parameters of esport gameplays and the results of these gameplays.
c. Possible forecasting by a neural network the result of the future game between given players or teams.

The invention also includes the system for implementation of this method and a ranking created by the use of this method.

## Description

The subject of the invention is a method of creating ranking, a system for creating ranking and a ranking, mainly - but not solely - for esport gameplays, in particular - but not solely - for MOBA (*Multiplayer Online Battle Arena*) video games type. More specifically the invention relates to the use of neural networks for the purpose of creating such a ranking on the basis of selected data.

Ranking systems (also known by the name of rating or scoring etc.) exist in many practical situations, i.e. in finance, politics, trade, sport etc. The majority of ranking systems are based on the aggregated opinions of experts or a larger group of people. In traditional sports rankings are well-known both in the professional league, such as basketball, football, hence team games, and in individual games, such as tennis. The position in the ranking very often determines the incomes of the players, therefore rankings constitute an important element of the business environment of these sports. Currently, most ratings are based on expert opinions and on a certain amount of data regarding game results themselves (this situation may change in the upcoming years).

There are also ranking systems, which are based on objective data (the so-called "*data driven*" ratings). These systems create rankings with the help of algorithms that use these data. Examples are: ELO rating system (from the name of an American scientist and chess player of Hungarian origin, professor Arpad Elo "*whose works have shaped chess rating system based on scientific premises*" - Wikipedia: https://pl.wikipedia.org/wiki/Ranking_szachowy), GLICKO rating system (Wikipedia: https://en.wikipedia.org/wiki/Glicko_rating_system) used as well in individual sports and their extension to team sports, such as *TrueSkill* (described in the published international patent application no. WO2007094909A1 for Microsoft Corp., USA).

Different aspects of rankings and the methods of creating them are subject of patent applications - i.e. US7050868B1 "*Bayesian scoring*" or US20060184260A1 "*Player ranking with partial information*"*.*

All these rankings, however, contain arbitrary assumptions concerning probability distributions of random variables and other parameters describing conducted gameplays. For example, ELO assumes that actions of players are described as Gaussian distribution, uses arbitrarily selected constant K, GLICKO arbitrarily selects R parameters, TrueSkill assumes Bayesian modelling and additionally Gaussian distribution in the description of the players. All these are solely assumptions, which - in the best case - are met only approximately, and in the worst case - are false. This constitutes an obvious disadvantage of the mentioned rankings. Additionally, in the situation of team gameplays, correlation between rankings of particular players and a team ranking is arbitrarily calculated with the use of simple formulas.

Quality test of the functioning of these algorithms is the level of efficiency with which they can predict the results of the game between players (teams).

Due to the advancements in neural networks development, it seems that this problem can be solved by much better utilization of neural networks for the purpose of ranking creation.

Neural networks are the subject of numerous patent applications, pertaining to various aspects of neural networks themselves, and also to using neural networks for solving specific problems. For example, patent publication US20200086778A1 can be listed, which concerns the use of neural networks in device management (whose description refers to an artificial neural network ANN, without specifying what type of network has been used), or patent publication US20200068350A1. Other patent applications enumerate the names of specific neural networks - i.e. US20200074393A1, US20200057889A1 - "*convolutional neural network*", US20200077282A1 - "*deep recurrent neural network*" or US20200065479A1 - "*deep neural network*".

The idea of using neural networks for creating ranking is known i.e. from the USA patent application no. US20140279773A1 titled "*Scoring Concept Terms Using a Deep Network*". The object of the present invention therefore is to propose a ranking and a method of creating ranking devoid of the shortcomings mentioned above as arbitrary and - most often false - assumptions. The proposed method produces a better ranking - meaning more objective and forecasting results of the game between players (teams) with higher efficiency. The other object of the invention is to deliver a system that is adjusted and programmed to create such a ranking.

The proposed method of creating a ranking is based on the construction of a neural network model using these data, where the said neural network - after the stage of learning from historical data and the results - forecasts results of the games between the teams and also assigns individual rankings to players. Contrary to former systems, no arbitrary assumptions are made in regards to the probability distribution.

According to the invention, a method of creating ranking, especially a ranking of players or teams in esport gameplays, on the basis of historical data, with the use of neural networks including the following steps:
a. Neural network learning on the basis of historical data, especially data on the parameters of esport games and the results of these games.
b. Creating a ranking of players or teams via a neural network on the basis of current data, especially data on the parameters of esport games and the results of these games.
c. Potential forecasting by a neural network of a future game result between given players and teams.

Preferably, mentioned data on the parameters of esport gameplays and the results of these gameplays include at least the rankings of players participating in the game, and preferably also one or more of the following information: game result - as: winning, losing, tie; numeric game result - as a number of points of one team and a number of points of the other team; ID of a player and a character they are using in the game; information on the course of the game - including: the number of killed opponents, the amount of acquired goods, data related to entire teams, information on the course of the game performed by individual players - including: the number of killed opponents, the amount of acquired gold.

A neural network in the form of Transformer algorithm, deep neural network, especially recursive one, or convolutional neural network shall be used preferably.

Preferably, data is gathered and/or ranking is shared via the internet, especially via web pages.

The invention also relates to a system for creating ranking, especially a ranking of players or teams in esport gameplays, on the basis of historical data, with the use of neural networks, including one or more computers with access to historical data, especially data on the parameters of esport gameplays and the results of these gameplays, where the said computers are configured and programmed to implement the method according to the invention.

The invention also includes a ranking, especially a ranking of players or teams in esport gameplays, derived from the implementation of the method according to the invention in the system according to the invention.

A particular application area of the present invention is to create a ranking of esport gameplays, particularly for the MOBA (*Multiplayer Online Battle Arena*) type video games. Those are gameplays played between multiplayer teams on a virtual board, where the game is played over the internet. Examples of such games are: League of *Legends*, *DotA 2*, *StarCraft* etc. These games generate an enormous amount of data, such as: game results, results of the players participating in the game, the characters they are using in the game, gameplay details etc., where the said data are openly available.

The invention is also applicable to other games, including real-world games - both team games - i.e. volleyball, and individual games - i.e. tennis. For the implementation of the invention it is important to dispose of the historical games data - which are used for neural network learning. It is not important, however, which specific game these data apply to (esport, a video game or a real-world game).

For the purpose of creating a ranking it is not excluded to use any of the historical data derived from historical games. It is recommended to use data in the form of at least the rankings of players participating in the game.

### Preferred embodiments of the invention

The invention will be now closely discussed showing its preferred embodiments.

As mentioned above, the proposed method of creating a ranking is based on a construction of a neural network model using these data, where the said neural network - after the stage of learning from historical data and the results - forecasts results of the games between the teams and also assigns individual rankings to players. For the purpose of creating a ranking it is not excluded to use any of the historical data derived from historical games. It is recommended to use data in the form of at least the rankings of players participating in the game.

For example, rankings can assume the use of the following data:
a) Rankings of individual players and a game result - as: winning, losing, tie, and preferably solely these data.
b) Rankings of individual players and a numerical game result - a number of points of one team and a number of points of the other team, and preferably solely these data.
c) ID of a player and the character they are using in the game (a player can use different characters in different games).
d) Additionally (in relation to points a)-c)) - information on the course of the game - including the number of killed opponents, amount of acquired goods, data related to entire teams.
e) Additionally (in relation to points a)-d)) - information on the course of the game of the individual players - including: the number of killed opponents, the amount of acquired gold etc.

According to the invention, a neural network first learns on the basis of data on games (i.e. such as listed above) and the results of these games. Next, on the basis of current data - a neural network is used for forecasting results of future games and scheduling team rankings, competitors rankings etc. The term "neural network", used in the herein specification, shall be understood according to the subclass G06N3/02 of the class G06N3/00 of the International Patent Classification. In particular, neural networks known i.e. from the patent publications US20200057889A1 - "convolutional neural network", US20200077282A1 - "deep recurrent neural network" or US20200065479A1 - "deep neural network" can be used. Using the algorithm Transformer - known from the USA patent publication no. US20190354567A1 "*Universal transformer*" also will be possible.

The invention can be applicable, among others, to the game *League of Legends*, *DotA 2* or *StarCraft.*

It is planned to set up a webservice which would create rankings for players of the games listed above, i.e. *League of Legends*, in the way specified above. The system will be available for any internet user from any country. The proposed system requires an enormous computing power, which is the reason why it has been available to practical use only recently - the newest computer systems have sufficient computing power to calculate neural network models as big as those anticipated in the present invention.

## Claims

1. A method of creating ranking, especially a ranking of players or teams in esport gameplays, on the basis of historical data, with the use of neural networks, including the following steps:
a) Neural network learning on the basis of historical data, and particularly data on the parameters of esport gameplays and the results of these gameplays.
b) Creating ranking of players or teams through a neural network on the basis of current data, and particularly data on the parameters of esport gameplays and the results of these gameplays.
c) Possible forecasting by a neural network the result of the future game between given players or teams.

2. The method according to claim 1, **characterized in that** mentioned data on the parameters of esport gameplays and the results of these gameplays include at least the rankings of players participating in the game, and preferably also one or more of the following information: game result - as a: winning, losing, tie; numeric game result - as a number of points of one team and a number of points of the other team; ID of a player and a character they are using in the game; information on the course of the game - including: the number of killed opponents, the amount of acquired goods, data related to entire teams, information on the course of the game performed by individual players - including: the number of killed opponents, the amount of acquired gold.

3. The method according to claim 1 or 2, **characterized in that** a neural network in the form of Transformer algorithm, deep neural networks, especially recursive one, or a convolutional neural network shall be used.

4. The method according to claim 1 or 2, **characterized in that** the data is collected and/or the ranking is made available via the internet, especially via web pages.

5. The system for creating ranking, especially a ranking of players or teams in esport gameplays, on the basis of historical data, with the use of neural networks, including one or more computers having access to historical data, and particularly data on the parameters of esport gameplays and the results of these gameplays, where said computers are configured and programmed to perform the method of any of the claims 1 to 4.

6. A ranking, especially a ranking of players or teams in esport gameplays, derived from the implementation of the method of any of the claims from 1 to 4 by the system of claim 5.
